# EUROPÄISCHE PATENTSCHRIFT

(11) **EP 3 097 624 B1**
(45) Veröffentlichungstag und Bekanntmachung des Hinweises auf die Patenterteilung: **14.03.2018**
(21) Anmeldenummer: 15701158.6
(22) Anmeldetag: 20.01.2015
(51) Int. Cl.: H02J 3/38, G05F 1/67

(54) **WECHSELRICHTER, INSBESONDERE ALS TEIL EINES ENERGIEERZEUGUNGSVERBUNDES, UND VERFAHREN**
POWER INVERTER, IN PARTICULAR AS PART OF AN ENRGY GENERATION COMPOUND, AND METHOD
ONDULEUR, EN PARTICULIER COMME UNE PARTIE D'UN PRODUCTION D'ENERGIE COMPOSITE, ET PROCÉDÉ

(30) Priorität: 22.01.2014 DE 102014100690
(43) Veröffentlichungstag der Anmeldung: 30.11.2016
(73) Patentinhaber: SMA Solar Technology AG, 34266 Niestetal (DE)
(72) Erfinder: MENDE, Denis, 37247 Grossalmerode (DE); PREMM, Daniel, 34260 Kaufungen (DE); SANDER, Stephan, 37339 Breitenworbis OT Beuterode (DE)
(74) Vertreter: Lahnor, Peter
(86) Internationale Anmeldenummer: PCT/EP2015/050932
(87) Internationale Veröffentlichungsnummer: WO 2015/110400

(56) Entgegenhaltungen:
- EP-A2- 0 090 212
- EP-A2- 2 276 137
- DE-A1-102012 217 455
- US-A1- 2014 001 857

## Beschreibung

Die Erfindung betrifft einen Wechselrichter zur Umwandlung von DC-Leistung eines Generators in netzkonforme AC-Leistung, einen Energieerzeugungsverbund mit einer Mehrzahl von Wechselrichtern, sowie ein Verfahren zur Umwandlung von DC-Leistung eines Generators in netzkonforme AC-Leistung.

Seitdem Erzeugungsanlagen für erneuerbare Energie in hohem Maße zum Energieaufkommen des öffentlichen Stromnetzes beitragen, besteht der Wunsch, den Umfang der Einspeisung von Energie durch diese Anlagen bei Bedarf zu begrenzen, um das Stromnetz zum Beispiel bei geringer Leistungsabnahme durch die angeschlossenen Verbraucher zu stabilisieren, bzw. eine kurzfristig abrufbare Leistungsreserve vorzuhalten. Eine Möglichkeit zur Begrenzung der Einspeisung, also zur Abregelung, besteht darin, die Anlage so zu steuern, dass sie nur einen vorgegebenen Prozentsatz der im optimalen Arbeitspunkt MPP (Maximum Power Point) zur Verfügung stehenden Leistung in das angeschlossene Stromnetz einspeist, eine andere Möglichkeit besteht in der Reduktion um einen festen Betrag, beispielsweise einem vorgegebenen Prozentsatz der Nennleistung. Um diese Vorgabe optimal zu erfüllen, ist es notwendig, die maximal mögliche Leistung eines Generators der Anlage zu kennen. Da sich diese Leistung zum Beispiel aufgrund einer variierenden Einstrahlung bei Photovoltaikgeneratoren im Laufe der Zeit stark ändern kann, ist es erforderlich, regelmäßig den aktuellen MPP-Leistungswert neu zu bestimmen. Hierzu ist es erforderlich, eine Kennlinie des Generators über einen ausreichenden Bereich abzufahren, der den MPP enthält oder durch Extrapolation eine Schätzung über die Lage des MPPs erlaubt. Um die Generatorkennlinie in diesem Bereich zu analysieren, kann es erforderlich sein, die eingespeiste Leistung der Anlage zum Teil deutlich von der Abregelleistung abweichen zu lassen. Die Druckschrift DE102012217455 stellt ein Regelungsverfahren für eine Photovoltaikanlage mit einem Regler vor, der die Leistungsabgabe der Photovoltaikanlage abhängig von einem vorgegebenen Sollwert regelt, wobei die aktuelle Einstrahlung erfasst und eine Stellgröße des Reglers auf die von der Einstrahlung abhängige maximale Leistung limitiert wird.

Die Druckschrift DE102010038941A1 offenbart einen Verbund mehrerer Wechselrichter, die über eine gemeinsame Steuerung derart betrieben werden, dass einer der Wechselrichter im MPP betrieben wird, während die anderen Wechselrichter ihre Leistung so anpassen, dass die Gesamtleistung des Verbundes einem vorgegebenen Wert entspricht. Diese Lösung erfordert einen hohen Kommunikationsaufwand zwischen den beteiligten Wechselrichtern und der gemeinsamen Steuerung. Außerdem ist es insbesondere bei Abregelung auf eine sehr geringe Abregelleistung nicht immer möglich, eine Anlage des Verbundes dauerhaft im MPP zu betreiben.

In diesem Zusammenhang weist die Druckschrift EP2276137 darauf hin, dass eine Kommunikation zwischen Modulstrangwechselrichtern in großen Photovoltaikanlagen über Rundsteuersignale aufwändig sei.

Es ist daher Aufgabe dieser Erfindung, einen Wechselrichter bereitzustellen, der in der Lage ist, innerhalb eines Energieerzeugungsverbundes eine Leistungsabweichung von einer vorgegebenen Abregelleistung während der Bestimmung eines MPP zu kompensieren, wobei innerhalb des Energieerzeugungsverbundes eine minimierte und robuste Kommunikation zwischen den beteiligten Wechselrichtern besteht. Es ist weiterhin Aufgabe diese Erfindung, ein Verfahren bereitzustellen, um eine kompensierende Leistungsbereitstellung eines Wechselrichters mit minimierter und robuster Kommunikation zu ermöglichen.

Diese Aufgabe wird gelöst durch einen Wechselrichter nach Anspruch 1, durch einen Energieerzeugungsverbund nach Anspruch 7, sowie ein Verfahren nach Anspruch 13. Vorteilhafte Ausführungsformen sind in den abhängigen Ansprüchen beschrieben.

Ein erfindungsgemäßer Wechselrichter zur Umwandlung von DC-Leistung eines Generators in netzkonforme AC-Leistung umfasst eine Scaneinheit zum Abfahren mindestens eines Teils einer Kennlinie des Generators zur Bestimmung eines MPP-Leistungswertes P_{MPP}. Im Fall einer Abregelung auf eine Abregelleistung P_{red} löst der Wechselrichter nur dann ein Abfahren der Kennlinie unter Bereitstellung eines von der Abregelleistung P_{red} abweichenden ersten Leistungsprofils aus, wenn am Wechselrichter ein Freigabesignal anliegt. Das Abfahren der Kennlinie zeigt der Wechselrichter durch Ausgabe eines Startsignals beziehungsweise eines Endsignals an. Weiterhin ist der Wechselrichter dazu eingerichtet, bei Empfang eines Startsignals, zum Beispiel von einem weiteren Wechselrichter eines Energieerzeugungsverbundes, ein zweites Leistungsprofil als AC-Leistung bereitzustellen, wobei das erste Leistungsprofil eine Abweichung von der Abregelleistung P_{red} mit einem Vorzeichen aufweist, das entgegengesetzt zu einem Vorzeichen einer Abweichung des zweiten Leistungsprofils von der Abregelleistung P_{red} ist. Insbesondere weist das erste Leistungsprofil eine Abweichung mit positivem Vorzeichen auf, d.h. das erste Leistungsprofil umfasst gegenüber der Abregelleistung erhöhte Leistungswerte. Durch das entgegengesetzte Vorzeichen des zweiten Leistungsprofils wird erreicht, dass in einem Energieerzeugungsverbund, in dem ein zweiter erfindungsgemäßer Wechselrichter das oben genannte Startsignal erzeugt hat, dessen erstes Leistungsprofil von der Abregelleistung abweicht, diese Abweichung durch das zweite Leistungsprofil zumindest teilweise kompensiert wird. An der Kompensation dieser Abweichung können aber auch weitere erfindungsgemäße Wechselrichter des Energieerzeugungsverbundes mit ihrem zweiten Leistungsprofil beitragen. Die gesamte vom Energieerzeugungsverbund erzeugte Leistung weist während des Abfahrens einer Kennlinie durch einen der Wechselrichter aufgrund der Kompensation durch das zweite Leistungsprofil des oder der anderen Wechselrichter eine Abweichung von der gesamten Abregelleistung auf, die geringer ist als die Abweichung des ersten Leistungsprofils des seine Kennlinie abfahrenden Wechselrichters von dessen Abregelleistung.

Unter dem Begriff Leistungsprofil wird ein Zeitverlauf der eingespeisten Leistung verstanden, welches sich durch ein gezieltes Abfahren der Generatorkennlinie ergibt, unabhängig davon über welche Parametervorgaben dieses Abfahren gesteuert wird. Das Abfahren kann beispielsweise durch eine zeitabhängige Vorgabe der Generatorspannung, des Generatorstromes oder der Generatorleistung erfolgen.

In einer Ausführungsform stellt der seine Generatorkennlinie abfahrende Wechselrichter anschließend einen aktuellen MPP-Leistungswert P_{MPP} über eine Kommunikationsschnittstelle bereit. Dieser Wert kann auf andere Wechselrichter des Energieerzeugungsverbundes übertragen werden und dort genutzt werden, um eine der Abregelleistung zu Grunde liegende Schätzung über den aktuellen MPP-Leistungswert dieses anderen Wechselrichters zu ändern. Auf diese Weise ist es möglich, Änderungen in den äußeren Bedingungen der Energieerzeugung durch den Generator, zum Beispiel Einstrahlungsänderungen, zu berücksichtigen, ohne dass ein erneutes Abfahren der Kennlinie durch jeden Wechselrichter erfolgen muss. Dies kann die Anzahl der erforderlichen Scan-Prozesse erheblich reduzieren, zum Beispiel, wenn die Abregelleistung als ein vorgegebener Prozentsatz des MPP-Leistungswertes oder als ein um einen Prozentsatz der Nennleistung reduzierten MPP-Leistungswert zu wählen ist und eine Anpassung der Abregelleistung in zeitlich kurzem Abstand zu Änderungen des MPP-Leistungswertes erfolgen soll.

Insbesondere wenn die einzelnen Wechselrichter des Energieerzeugungsverbundes weit entfernt voneinander platziert sind, kann das Freigabesignal, das Startsignal und/oder das Endsignal über eine Internetverbindung übertragen werden. Alternativ können auch eine gemeinsame Leitung oder separate Leitungen zur Übertragung dieser Signale beziehungsweise eine drahtlose Übertragung Verwendung finden.

Ein erfindungsgemäßer Energieerzeugungsverbund umfasst zwei oder mehr erfindungsgemäße Wechselrichter, die zum Austausch des Freigabesignal, des Startsignals und des Endsignal miteinander verbunden sind. Optional ist eine Steuereinrichtung vorgesehen, die mit den Wechselrichtern des Energieerzeugungsverbundes verbunden ist und das Freigabesignal erzeugt. Hierbei kann das Freigabesignal selektiv an einzelne oder eine Teilgruppe der Wechselrichter des Verbundes gesendet werden oder nur für diese gültig sein. Anstelle einer eigenständigen Steuereinrichtung kann aber auch einer der Wechselrichter diese Funktion übernehmen oder die Funktion kann über eine Teilgruppe oder alle Wechselrichter verteilt sein.

Die Steuereinrichtung bzw. die an der Erzeugung des Freigabesignals beteiligten Wechselrichter bestimmen die Reihenfolge und Häufigkeit des Scan-Prozesses innerhalb des Energieerzeugungsverbundes. Das wechselseitige Auslösen des Abfahrens der Kennlinie kann hierbei über ein Token gesteuert werden. Das Token wird von dem Wechselrichter, der aktuell einen Scan-Prozess durchführt, nach Abschluss an einen anderen Wechselrichter weitergereicht, der hierdurch die Freigabe erlangt, seinerseits einen Scan-Prozess durchzuführen, wobei der empfangende Wechselrichter das Token auch ungenutzt weiterreichen kann.

In einer weiteren Ausführungsform der Erfindung ist zumindest einer der Wechselrichter mit einem Generator mit verstellbarer Ausrichtung verbunden und stellt das erste Leistungsprofil während eines Scan-Prozesses anstelle einer Veränderung der Generatorspannung durch Veränderung der Generatorausrichtung bereit.

Ein erfindungsgemäßes Verfahren zur Umwandlung von DC-Leistung eines Generators in netzkonforme AC-Leistung durch einen Wechselrichter mit einer Scaneinheit zum Abfahren mindestens eines Teils einer Kennlinie des Generators dient der Bestimmung eines MPP-Leistungswertes, wenn der Wechselrichter sich in einem auf eine Abregelleistung abgeregelten Zustand befindet. Das Verfahren umfasst ein Abfahren der Kennlinie unter Bereitstellung eines von der Abregelleistung abweichenden ersten Leistungsprofils unter der Voraussetzung, dass ein Freigabesignal am Wechselrichter anliegt. Zu Beginn des Abfahrens wird ein Startsignal und zum Ende des Abfahrens der Kennlinie wird ein Endsignal gesendet. Im Falle eines Empfanges eines Startsignals, beispielsweise des von einem anderen Wechselrichter eines Energieerzeugungsverbundes erzeugten Startsignals, stellt der Wechselrichter ein zweiten Leistungsprofils als AC-Leistung bereit, wobei das erste Leistungsprofil eine Abweichung von der Abregelleistung mit einem Vorzeichen aufweist, das entgegengesetzt zu einem Vorzeichen einer Abweichung des zweiten Leistungsprofils von der Abregelleistung ist.

In einer Abwandlung des erfindungsgemäßen Verfahrens wird das Verfahren gemeinsam auf einem ersten und einem zweiten Wechselrichter ausgeführt. Das Abfahren der ersten Kennlinie erfolgt hierbei durch schrittweise Steigerung einer Sollwertvorgabe für den ersten Wechselrichter, wobei parallel das Abfahren der zweiten Kennlinie durch schrittweise, die Steigerung kompensierende Senkung einer Sollwertvorgabe für den zweiten Wechselrichter erfolgt. Die Steigerung der Sollwertvorgabe kann solange fortgesetzt werden, bis der erste Wechselrichter der Sollwertvorgabe nicht mehr folgen kann. Die höchste erreichte Sollwertvorgabe kann den MPP-Leistungswert für den ersten Wechselrichter bestimmen.

Anschließend kann zur Bestimmung des MPP-Leistungswertes des zweiten Wechselrichters ein Abfahren der ersten Kennlinie durch schrittweise Steigerung einer Sollwertvorgabe für den zweiten Wechselrichter und ein Abfahren der zweiten Kennlinie durch schrittweise, die Steigerung der Sollwertvorgabe des zweiten Wechselrichters kompensierende Senkung einer Sollwertvorgabe für den ersten Wechselrichter erfolgen. Hierbei bestimmt die höchste erreichte Sollwertvorgabe den MPP-Leistungswert für den zweiten Wechselrichter.

Die verschiedenen Sollwertvorgaben können durch eine Steuereinheit oder durch einen der beiden Wechselrichter erzeugt und übertragen werden. Das Freigabesignal, sowie das Startsignal und das Endsignal können als eigenständige Signale ausgestaltet sein, oder implizit durch die unterschiedlichen Sollwertvorgaben übertragen werden. Beispielsweise kann die erste übertragene Sollwertvorgabe als Startsignal bzw. Freigabesignal interpretiert werden, und eine auf die Abregelleistung zurückführende Sollwertvorgabe als Endsignal.

Der Wechselrichter kann durch eine Wechselrichtergruppe mit einer Mehrzahl von Einzelwechselrichtern gebildet werden, wobei das Abfahren der Kennlinie dadurch erfolgt, dass die Einzelwechselrichter der Gruppe nacheinander in zeitlich überlappender Weise eine den Einzelwechselrichtern zugeordnete Einzelkennlinie abfahren. Das zweite Leistungsprofil kann in dieser Ausführung in beliebiger Weise zwischen den Einzelwechselrichtern zur Bereitstellung verteilt werden.

Im Folgenden wird die Erfindung mithilfe von Figuren dargestellt, von denen
- Fig. 1: eine Ausführung eines erfindungsgemäßen Wechselrichters,
- Fig. 2: ein Diagramm einer Kennlinie eines Generators mit Abfahrwegen, so wie ein Diagramm mit Leistungsprofilen,
- Fig. 3: ein Ablaufdiagramm eines erfindungsgemäßen Verfahrens,
- Fig. 4: einen erfindungsgemäßen Energieerzeugungsverbund mit beispielhaften Leistungsprofilen, sowie
- Fig. 5: Leistungsprofile einer weiteren erfindungsgemäßen Ausführungsform zeigen.

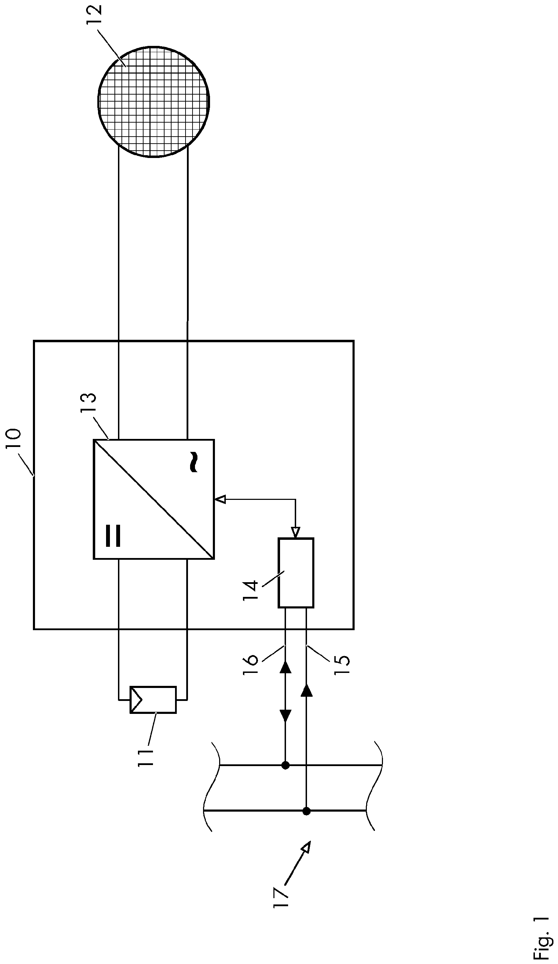

Fig. 1 zeigt einen erfindungsgemäßen Wechselrichter 10 zur Umwandlung von DC-Leistung eines angeschlossenen Generators 11, insbesondere eines Photovoltaik-Generators, in AC-Leistung, die in ein angeschlossenes Netz 12 übertragen wird, das beispielsweise ein einphasiges oder ein mehrphasiges, insbesondere dreiphasiges Netz sein kann. Zur Leistungsumwandlung wird eine Wechselrichterbrücke 13 eingesetzt, die über eine Scaneinheit 14 in der Form steuerbar ist, dass eine durch die Wechselrichterbrücke 13 umgewandelte Leistung mithilfe der Scaneinheit 14 eingestellt werden kann.

Die Scaneinheit 14 ist dazu eingerichtet, Signale, die über einen Bus 17 übertragen werden, zu empfangen. Über eine erste Leitung kann die Scaneinheit 14 ein Freigabesignal 15 empfangen und über eine zweite Leitung kann die Scaneinheit 14 ein Startsignal 16 senden bzw. empfangen. Über die zweite Leitung kann die Scaneinheit 14 zusätzlich ein Endsignal senden oder auch empfangen, wobei ebenfalls denkbar ist, dass das Endsignal über eine separate Leitung übertragen wird. Auch die erste Leitung und die zweite Leitung können getrennte Leitungen oder eine gemeinsame Leitung sein, insbesondere eine Kommunikationsverbindung. Beispielsweise ist es denkbar, dass der Bus 17 das Internet umfasst und die Signale mithilfe einer Internetverbindung übertragen werden. An den Bus 17 können weitere Wechselrichter oder auch eine nicht gezeigte Steuereinheit angeschlossen sein, um Freigabesignale, Startsignale bzw. Endsignale zwischen Wechselrichtern bzw. zwischen einem Wechselrichter und der Steuereinheit zu übertragen.

Die Scaneinheit 14 dient zum Auslösen und Steuern eines Abfahrens einer Kennlinie des Generators 11, um dessen MPP-Leistungswert P_{MPP} zu bestimmen, das heißt zu bestimmen, welche maximale Leistung der Generator 11 zu einem gegebenen Zeitpunkt zu erbringen in der Lage ist. Dies ist insbesondere in einem abgeregelten Zustand des Wechselrichters 10 wichtig, um eine Abregelleistung in diesem Zustand zu bestimmen, wenn die Abregelung abhängig von der maximal möglichen Leistung festzulegen ist. Bei einem erfindungsgemäßen Wechselrichter 10 ist die Scaneinheit 14 dazu eingerichtet, ein solches Abfahren der Kennlinie nur dann auszulösen, wenn ein Freigabesignal 15 an der Scaneinheit anliegt. Der Beginn des Abfahrens der Kennlinie wird durch ein Startsignal 16 angezeigt, während das Ende des Abfahrens der Kennlinie durch ein Endsignal gekennzeichnet wird. In dem Zeitraum während des Abfahrens der Kennlinie, das heißt zwischen Startsignal 16 und Endsignal, stellt die Steuereinrichtung sicher, dass kein Freigabesignal 15 über den Bus 17 übertragen wird beziehungsweise an dem Wechselrichter 10 anliegt. Alternativ kann der Wechselrichter 10 dazu eingerichtet sein, diesen Zeitraum als einen Zeitraum zu interpretieren, in dem das Freigabesignal 15 nicht anliegt, wobei regelmäßig nur der Fall relevant ist, dass Startsignal und Endsignal von einem anderen an den Bus 17 angeschlossenen Wechselrichter gesendet werden. Hierdurch wird sichergestellt, dass jeweils nur einer der über den Bus 17 miteinander verbundenen Wechselrichter eines Wechselrichterverbundes zu einem gegebenen Zeitpunkt ein Abfahren der Kennlinie durchführt.

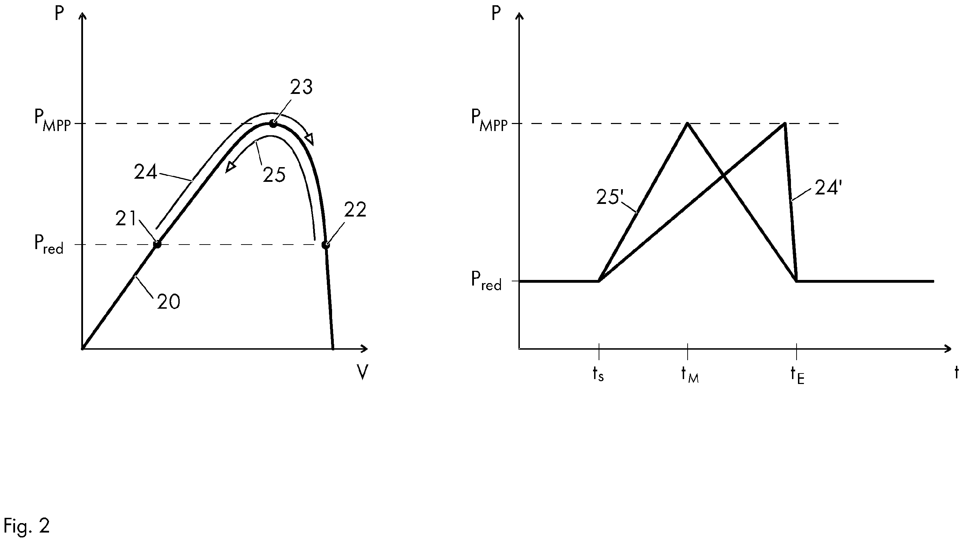

Fig. 2 zeigt als erstes Diagramm auf der linken Seite eine Kennlinie 20 eines Generators 11, bei dem auf der Y-Achse die Leistung und auf der X-Achse die Generatorspannung aufgezeichnet ist. Auf der rechten Seite von Fig. 2 zeigt ein zweites Diagramm zwei Beispiele von Leistungsprofilen 24', 25', die während des Abfahrens der Kennlinie 20 des Wechselrichters 10 entstehen, wobei auf der X-Achse die Zeit und auf der Y-Achse die Leistung aufgetragen ist. Die entsprechenden Abfahrwege 24, 25 der Kennlinie 20 sind in dem ersten Diagramm illustriert.

In einer ersten Variante des Abfahrens der Kennlinie 20, entsprechend dem Leistungsprofil 24', befindet sich der Wechselrichter 10 zunächst in einem abgeregelten Zustand am Betriebspunkt 21 und gibt eine Abregelleistung P_{red} an das Netz 12 ab. Beginnend zu einem Startzeitpunkt tₛ wird die vom Wechselrichter 10 abgegebene Leistung mit einer linearen Steigerungsrate erhöht, wodurch der Betriebspunkt des Generators 11 zu steigenden Spannungen verlagert wird. Wenn der MPP-Leistungswert P_{MPP} am MPP 23 erreicht wird, kann der Generator die geforderte Leistung nicht mehr erbringen. Zu diesem Zeitpunkt t_{E} wird der Generator am Betriebspunkt 22 wieder in einen abgeregelten Zustand gebracht und die in das Netz eingespeiste Leistung wird auf die Abregelleistung P_{red} reduziert, sowie das Endsignal gesendet. Falls der erreichte MPP-Leistungswert P_{MPP} von einem vorher bestimmten MPP-Leistungswert abweicht, kann die Abregelleistung P_{red} nach Ende des Abfahrens der Kennlinie 20 entsprechend angepasst werden.

In einer zweiten Variante des Abfahrens der Kennlinie 20 gemäß Leistungsprofil 25' befindet sich der Wechselrichter 10 zunächst in einem abgeregelten Zustand am Betriebspunkt 22 bei der Abregelleistung P_{red}. Hier wird zum Startzeitpunkt tₛ das an das Netz 12 abgegebene Leistungsprofil 25' in Form einer Rampe erhöht, bis der MPP 23 erreicht wird. Zu diesem Zeitpunkt t_{M} kann ein Mittelsignal gesendet werden und die Leistung wird mit einer Rampe reduziert, bis am Betriebspunkt 21 wieder die Abregelleistung P_{red} erreicht wird. Da auch in diesem Fall der MPP 23 während des zugeordneten Abfahrweges 25 erreicht wird, ist auch hier der MPP-Leistungswert P_{MPP} am MPP 23 am Ende des Abfahrens bekannt und kann bei der Abregelleistung P_{red} berücksichtigt werden.

Alternativ zu den zwei gezeigten Leistungsprofilen 24', 25' sind auch andere Leistungsprofile denkbar, die zu einem Übergang des Betriebspunktes des Generators 11 zwischen den Betriebspunkte 21 und 22 führen oder solche, die ausgehend von einem der Betriebspunkte 21, 22 einen Teil der Kennlinie 20 abfahren, der ausreicht, um Rückschlüsse auf den aktuell vorliegenden MPP-Leistungswert P_{MPP} am MPP 23 treffen zu können, um zum Endzeitpunkt t_{E} wieder an dem Betriebspunkt zu enden, an dem das Abfahren der Kennlinie 20 begonnen hat. Das Leistungsprofil kann sich auch daraus ergeben, dass ein vorgegebenes Spannungs- oder Stromprofil abgefahren wird, und sich aufgrund der aktuellen Kennlinie des Generators 11 ein entsprechendes Leistungsprofil einstellt.

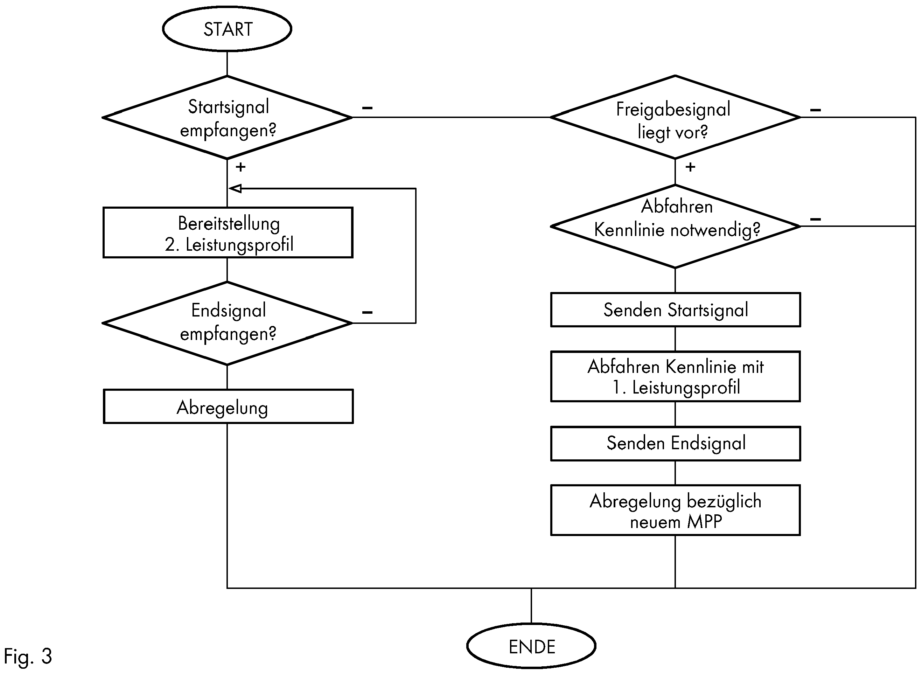

Fig. 3 zeigt ein beispielhaftes Ablaufdiagramm für ein erfindungsgemäßes Verfahren, bei dem der Wechselrichter 10 zunächst prüft, ob ein Startsignal 16 von einem anderen Wechselrichter, der an den Bus 17 angeschlossen ist, empfangen wurde. Wenn ein solches Startsignal empfangen wurde, beginnt der Wechselrichter 10, anstelle einer zeitlich konstanten Abregelleistung P_{red} ein zweites, zeitlich variables Leistungsprofil bereitzustellen. Das zweite Leistungsprofil wird so lange bereitgestellt, bis ein Endsignal über den Bus 17 empfangen wurde. Danach kehrt der Wechselrichter 10 zu einer Bereitstellung einer zeitlich konstanten Abregelleistung zurück. Alternativ kann das zweite Leistungsprofil beginnend mit dem Startsignal 16 auch unabhängig von einem Empfang eines Endsignals bereitgestellt werden, bzw. das Endsignal kann bei vollständigem Durchlauf des zweiten Leistungsprofils erzeugt und durch den Bus 17 übertragen werden. In der letztgenannten Variante kann dann das Abfahren des ersten Leistungsprofils bei Empfang eines Endsignals über den Bus 17 abgebrochen werden. Dies umfasst eine Ausführung, bei der dasjenige Leistungsprofil, das früher vollständig abgefahren wurde, zur Bereitstellung des Endsignals und so zum Abbruch des Abfahrens des jeweilig anderen Leistungsprofils führt.

Falls kein Startsignal empfangen wurde, prüft der Wechselrichter 10, ob über den Bus 17 ein Freigabesignal 15 anliegt und ob ein Abfahren der Kennlinie notwendig ist. Ist beides der Fall, sendet der Wechselrichter 10 ein Startsignal 16 und beginnt, die Kennlinie 20 unter Bereitstellung eines ersten Leistungsprofils abzufahren. Nach Abschluss des Abfahrens der Kennlinie 20 sendet der Wechselrichter 10 ein Endsignal und kehrt in den abgeregelten Zustand zurück, wobei die Abregelleistung vorzugsweise auf den MPP-Leistungswert P_{MPP} bezogen wird, der durch das Abfahren der Kennlinie neu bestimmt wurde. Optional stellt der Wechselrichter 10 diesen aktualisierten MPP-Leistungswert P_{MPP} über eine separate Kommunikationsschnittstelle oder über den Bus 17 anderen angeschlossenen Wechselrichtern zur Verfügung. Diese Wechselrichter können ihren Wert der Abregelleistung P_{red} mithilfe dieses aktualisierten MPP-Leistungswertes P_{MPP} anpassen, zum Beispiel um Änderungen der Einstrahlung Rechnung zu tragen.

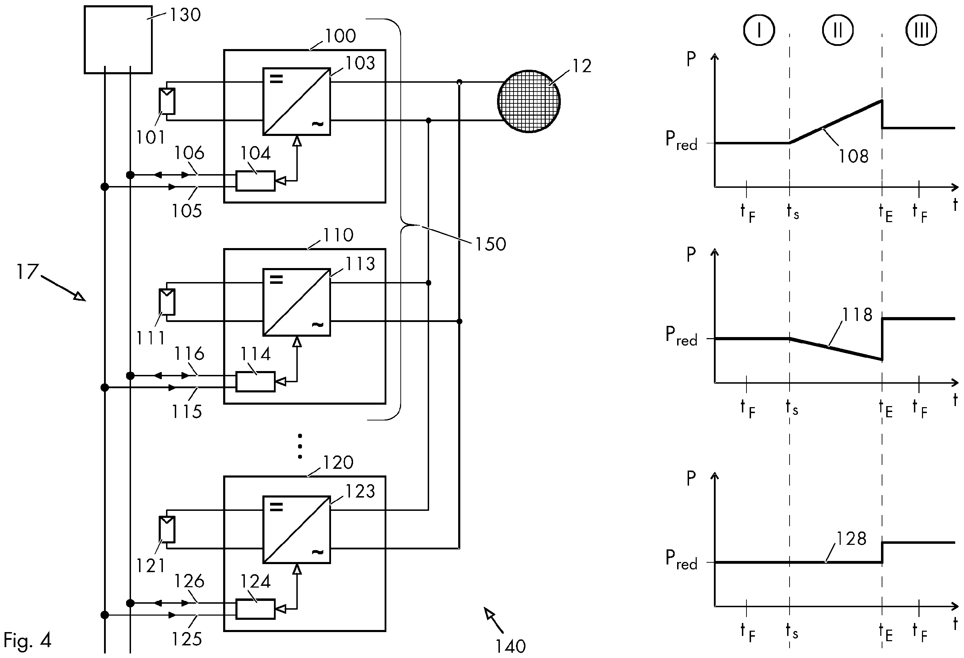

In einem erfindungsgemäßen Energieerzeugungsverbund 140 gemäß Fig. 4 wird das Zusammenspiel mehrerer Wechselrichter unter Verwendung des erfindungsgemäßen Verfahrens an einem Beispiel veranschaulicht. Im linken Teil der Fig. 4 sind ein erster Wechselrichter 100, ein zweiter Wechselrichter 110 und ein dritter Wechselrichter 120 jeweils über einen Bus 17 miteinander verbunden. Über den Bus können das Freigabesignal 105, 115, 125 bzw. das Startsignal 106, 116, 126 und zugeordnete Endsignale zwischen den Wechselrichtern mithilfe von Scaneinheiten 104, 114, 124 gesendet und empfangen werden. Zusätzlich ist an den Bus 17 eine Steuereinrichtung 130 angeschlossen, die beispielsweise dazu verwendet werden kann, mithilfe der Startsignale 106, 116, 126 und der Endsignale entsprechende Freigabesignale 105, 115, 125 zu erzeugen, wobei Freigabesignale sowohl spezifisch für den jeweiligen Wechselrichter als auch unspezifisch für alle Wechselrichter gültig sein kann. Entsprechend kann die Steuereinrichtung 130 sowohl ein Freigabesignal für einen einzelnen Wechselrichter, für eine Gruppe von Wechselrichtern oder für alle Wechselrichter erzeugen. Auf diese Weise kann die Steuereinrichtung 130 die Reihenfolge und Häufigkeit mitbestimmen oder festlegen, mit der die Wechselrichter des Energieerzeugungsverbundes 140 ihre jeweiligen Kennlinien abfahren. Alternativ ist es aber auch denkbar, dass die Wechselrichter untereinander diese Reihenfolge bestimmen. Dies kann beispielsweise durch Weitergabe eines Tokens zwischen den Wechselrichtern erfolgen. Die Reihenfolge kann sich aber auch ohne eine Koordination zwischen den Wechselrichtern dadurch ergeben, dass jeder Wechselrichter den Zeitpunkt selbst bestimmt, zu dem er seine Kennlinie abfährt, sofern ein Freigabesignal vorliegt. Daher kann die Steuereinrichtung 130 innerhalb des Energieerzeugungsverbundes 140 auch fehlen.

Jeder der Wechselrichter 100, 110, 120 wandelt eine DC-Leistung eines angeschlossenen Generators 100, 111, 121 mit jeweils dem Wechselrichter zugeordneten Wechselrichterbrücke 103, 113, 123 in eine AC-Leistung um und speist diese in ein angeschlossenes Netz 12 ein. Die zu wandelnde Leistung kann über die jeweilige Scaneinheit 104, 114, 124 des Wechselrichters in Abhängigkeit der empfangenen Signale gesteuert werden.

Ein beispielhafter Leistungsverlauf, der sich aus einem Ablauf des erfindungsgemäßen Verfahrens ergibt, ist im rechten Teil der Fig. 4 in Form von drei Diagrammen dargestellt, die jeweils einem der drei Wechselrichter 100, 110, 120 zugeordnet sind und bei denen auf der X-Achse die Zeit und auf der Y-Achse die Leistung aufgetragen ist. Das rechte obere Diagramm ist hierbei dem Wechselrichter 100, das rechte mittlere Diagramm dem Wechselrichter 110 und das rechte untere Diagramm dem Wechselrichter 120 zugeordnet. In einer Phase I befinden sich alle Wechselrichter im abgeregelten Zustand und stellen jeweils eine Abregelleistung P_{red} bereit. Zu einem Freigabezeitpunkt t_{F} liegt zumindest am ersten Wechselrichter 100 ein Freigabesignal an. Zu einem Startzeitpunkt t_{S}, zu dem die Phase II beginnt, sendet der erste Wechselrichter 100 ein Startsignal 106 und beginnt, seine Generatorkennlinie unter Bereitstellung eines ersten Leistungsprofils 108 abzufahren. Im gezeigten Fall umfasst das erste Leistungsprofil 108 eine lineare zunehmende Wandlerleistung des ersten Wechselrichters 100. Die zweite Phase II endet zu einem Endzeitpunkt t_{E}, zu dem der Wechselrichter 100 ein Endsignal gesendet und in einen abgeregelten Zustand zurückkehrt, wobei der Wechselrichter 100 in der anschließenden Phase III eine geänderte Abregelleistung bereitstellt, die den während des Abfahrens der Kennlinie bestimmten aktuellen MPP-Leistungswert P_{MPP} berücksichtigt.

Im rechten mittleren Diagramm ist das Leistungsprofil 118 des zweiten Wechselrichters 110 gezeigt. Zum Startzeitpunkt t_{S} empfängt der zweite Wechselrichter 110 das Startsignal des ersten Wechselrichters 100 und stellt ein zweites Leistungsprofil 118 an seinem Ausgang bereit. Im gezeigten Beispiel nimmt die Wandlerleistung linear mit der Zeit ab. Zum Endzeitpunkt t_{E} empfängt der zweite Wechselrichter 110 das Endsignal des ersten Wechselrichters 100 und kehrt in einen abgeregelten Zustand zurück, wobei die Abregelleistung P_{red} in Abhängigkeit eines vom ersten Wechselrichter 100 bereitgestellten aktuellen MPPs-Leistungswertes angepasst wird. Im gezeigten Beispiel kompensiert das zweite Leistungsprofil 118 des zweiten Wechselrichters 110 die Abweichung des ersten Leistungsprofils 108 des ersten Wechselrichters 100 von der jeweiligen Abregelleistung P_{red}, so dass die Summe der Leistungsabgaben beider Wechselrichter im Wesentlichen oder genau der Summe der Abregelleistungen P_{red} vor dem Startzeitpunkt t_{S} entspricht. Auf diese Weise wird vermieden, dass das Abfahren der Kennlinie zur Bestimmung eines aktuellen MPP-Leistungswertes P_{MPP} zu einer Abweichung der kumulativen Leistungsabgabe des Energieerzeugungsverbundes 140 von den Vorgaben der Abregelung führt.

Mit Bezug auf Fig. 2, bei der ein Abfahren der Kennlinie mit einem Leistungsprofil beschrieben ist, bei dem beim Wechsel zwischen einer steigenden Leistungsrampe und einer fallenden Leistungsrampe ein Mittelsignal gesendet wird, kann in einer alternativen, nicht gezeigten Ausführung entsprechend das zweite Leistungsprofil des kompensierenden Wechselrichters 110 eine zunächst fallende Leistungsrampe, und dann eine steigende Leistungsrampe aufweisen, wobei der Wechsel zwischen den Leistungsrampen bei Empfang des Mittelsignals erfolgt.

Im unteren rechten Diagramm ist das Leistungsprofil des dritten Wechselrichters 120 dargestellt. Zum Startzeitpunkt t_{S} verlässt der dritte Wechselrichter 120 seinen abgeregelten Zustand nicht, so dass sein Leistungsprofil 128 den zeitlich konstanten Wert seiner Abregelleistung P_{red} beibehält. Der dritte Wechselrichter 120 beteiligt sich also in diesem Beispiel nicht an der Kompensation einer Leistungsabweichung eines der Wechselrichter des Energieerzeugungsverbundes 140 während des Abfahrens einer Kennlinie. Zum Endzeitpunkt t_{E} passt auch der dritte Wechselrichter 120 seine Abregelleistung P_{red} in Abhängigkeit des vom ersten Wechselrichters 100 übermittelten aktuellen MPP-Leistungswertes an.

In einer weiteren Ausführungsform kann die Leistungsabweichung eines der Wechselrichter des Energieerzeugungsverbundes 140 während des Abfahrens seiner Kennlinie von mehreren, insbesondere von allen der übrigen Wechselrichter des Energieerzeugungsverbundes 140 gemeinsam kompensiert werden. Der Beitrag zur Kompensation der Leistungsabweichung kann zwischen den beteiligten Wechselrichtern gleichverteilt sein oder geeignet gewichtet verteilt werden. Im Rahmen einer vorteilhaften Ausgestaltung kann eine feste Zuordnung zwischen Wechselrichtern getroffen werden, bei der festgelegt wird, welcher Wechselrichter oder welche Teilgruppe der Wechselrichter die abweichende Leistung eines anderen Wechselrichters des Verbundes kompensiert. Dies kann einfach dadurch umgesetzt werden, dass dem gesendeten Startsignal eine Identifikation des sendenden Wechselrichters beigefügt wird, so dass der empfangende Wechselrichter nur dann sein zweites Leistungsprofil bereitstellt, wenn dieser dem sendenden Wechselrichter zur Kompensation zugeordnet ist.

Um eine möglichst vollständige Kompensation der Leistungsabweichung zu erreichen, ist es vorteilhaft, dass das erste Leistungsprofil während des Abfahrens der Kennlinie, möglichst gut vorbestimmt ist und nicht oder nur wenig vom Verlauf der Kennlinie bestimmt wird. Idealerweise hängt der Verlauf des ersten Leistungsprofils nicht vom Verlauf der Kennlinie ab, sondern der Verlauf der Kennlinie bestimmt lediglich die Zeitdauer zwischen dem Startzeitpunkt t_{S} und dem Endzeitpunkt t_{E} des Abfahrens der Kennlinie. Auf diese Weise ist es nicht erforderlich, ein Ausmaß einer Leistungsabweichung des eine Kennlinie abfahrenden Wechselrichters zwischen Wechselrichtern des Energieerzeugungsverbundes zu kommunizieren, um eine ausreichende oder gar vollständige Kompensation dieser Leistungsabweichung zu erreichen. Da in den Fällen, in denen anstelle eines vorgegebenen ersten Leistungsprofils ein Spannungs- oder Stromprofil vom Wechselrichter 100 vorgegeben wird, aus denen sich das erste Leistungsprofil in Abhängigkeit der Generatorkennlinie ergibt, in der Regel nur eine teilweise Kompensation der Leistungsabweichung erreichbar ist, wird hier zugunsten eines einfacher realisierbaren Abfahrens der Kennlinie auf eine vollständige Kompensierbarkeit verzichtet.

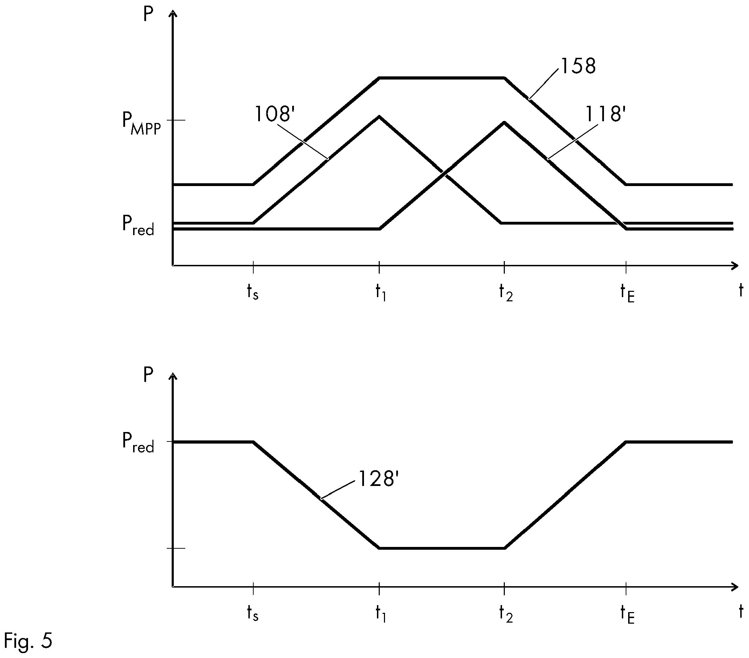

In einer weiteren Ausführungsform erfolgt das Abfahren der Generatorkennlinie innerhalb einer Wechselrichtergruppe mit einer Mehrzahl von Einzelwechselrichtern des Energieerzeugungsverbundes 140 in koordinierter Weise derart, dass die Einzelwechselrichter nacheinander, aber zeitlich überlappend das Abfahren der Kennlinie durchführen. Hierbei kann ein konstanter Zeitversatz gewählt werden, oder es werden Signale ausgetauscht, beispielsweise das vorher beschriebene Mittelsignal, zur Koordination der einzelnen Abfahrprozesse. Beispielsweise bilden die Wechselrichter 100 und 110 der Fig. 4 als Einzelwechselrichter eine solche Gruppe 150. In Fig. 5 sind beispielhafte Leistungsprofile des Energieerzeugungsverbundes 140 bei Ausübung dieser Ausführungsform gezeigt, wobei das obere Diagramm die ersten Leistungsprofile 108', 118' der Gruppe 150 der Wechselrichter 100, 110 als Einzelwechselrichter zeigt. Das untere Diagramm zeigt dann das zweite Leistungsprofil 128' des Wechselrichters 120, welches das kombinierte Leistungsprofil 158 der Gruppe 150 als Summe der ersten Leistungsprofile 108', 118' kompensiert. Zum Startzeitpunkt t_{S} beginnt zunächst der Wechselrichter 100 durch eine steigende Leistungsrampe seine Kennlinie in Richtung seines MPP abzufahren und ein Startsignal 106 wird erzeugt. Bei Erreichen des MPP zum Zeitpunkt t₁ reduziert der Wechselrichter 100 mittels einer sinkenden Leistungsrampe seine Leistungsabgabe, bis die Abregelleistung P_{red} wieder erreicht ist und der Wechselrichter 100 in den abgeregelten Zustand wechselt. Gleichzeitig zum Zeitpunkt t₁ beginnt der Wechselrichter 110, seine Leistung über eine Rampe zu erhöhen, bis er zum Zeitpunkt t₂ seinen MPP erreicht und auf eine sinkende Leistungsrampe wechselt. Zum Zeitpunkt t_{E} erreicht der Wechselrichter 110 wieder den abgeregelten Zustand und ein Endsignal wird erzeugt. Somit verhält sich die Gruppe 150 vergleichbar zu einem einzelnen erfindungsgemäßen Wechselrichter durch Abgabe eines kombinierten ersten Leistungsprofils 158 zwischen einem Startsignal und einem Endsignal. Die Abweichung des kombinierte Leistungsprofils 158 von der Abregelleistung P_{red} der Gruppe 150 wird durch den Wechselrichter 120 durch Abgabe eines zweiten Leistungsprofils 128' zwischen den Zeitpunkten des Startsignals und des Endsignals ausgeglichen, wobei der Wechselrichter 120 gegebenenfalls auf Mittelsignale zu den Zeitpunkten t₁, t₂ durch Anpassung des Profilverlaufs reagieren kann.

Das Startsignal und das Endsignal können grundsätzlich von beliebigen Einzelwechselrichtern der Gruppe 150 erzeugt werden, wobei Startsignal und Endsignal vom gleichen oder von unterschiedlichen Wechselrichtern erzeugt werden. Bevorzugt sendet derjenige Einzelwechselrichter das Startsignal, der zuerst seine Kennlinie abfährt, und das Endsignal sendet derjenige Einzelwechselrichter, der zuletzt seine Kennlinie abfährt. Die Zwischenzeitpunkte t₁, t₂ können durch Austausch von Mittelsignalen abgestimmt werden oder die beteiligten Einzelwechselrichter bestimmen sich diese Zeitpunkte durch vorgegebene Zeitdauern relativ zum Startsignal. Außerdem kann der Beginn des Abfahrens der Kennlinie eines Einzelwechselrichters unabhängig vom Zeitpunkt des Erreichens eines MPP durch einen anderen Einzelwechselrichter gewählt werden.

In einer weiteren vorteilhaften Ausführungsform des erfindungsgemäßen Verfahrens wird das Abfahren der Kennlinie bzw. das Bereitstellen eines Leistungsprofils dadurch realisiert, dass die Steuereinheit 130 oder einer der Wechselrichter eines Energieerzeugungsverbundes nacheinander eine Mehrzahl an Sollwerten der Leistungsabgabe an einen ersten Wechselrichter sendet. Der betroffene erste Wechselrichter versucht, eine dem Sollwert entsprechende Leistung bereitzustellen und meldet das Ergebnis an die sendende Einheit zurück. Das Ergebnis kann beispielsweise in Form eines erreichten Leistungswertes oder in Form eines logischen Signals übertragen werden, das ein vollständiges Erreichen des Sollwertes signalisiert. Bei Erreichen des Sollwertes kann der folgende gesendete Sollwert solange schrittweise erhöht werden, bis der Wechselrichter signalisiert, dass er den Sollwert nicht erreichen kann. Der letzte erreichte Sollwert kann dann als MPP-Leistungswert P_{MPP} aufgefasst werden. Zur Kompensation der Gesamtleistung des Energieerzeugungsverbundes wird gemeinsam mit dem Senden eines die Abregelleistung überschreitenden Sollwertes an den ersten Wechselrichter ein zweiter Sollwert an einen zweiten Wechselrichter (oder eine Mehrzahl an Sollwerten an mehrere Wechselrichter) gesendet, der gegenüber der Abregelleistung reduziert ist, so dass die Gesamtleistung des Energieerzeugungsverbundes konstant oder nahezu konstant bleibt.

Nach Erreichen des MPP-Leistungswert P_{MPP} kann der Wechselrichter durch Vorgabe neuer Sollwerte schrittweise zur Abregelleistung zurückgeführt werden, wobei die Zurückführung auf die Abregelleistung mit einem einzigen Schritt nicht ausgeschlossen ist. Die kompensierende Leistungsvorgabe an den zweiten Wechselrichter oder die entsprechende Wechselrichtergruppe erfolgt parallel, um auch während der Zurückführung auf die Abregelleistung eine konstante Gesamtleistung zu gewährleisten. Anschließend kann ein Abfahren der Kennlinie eines weiteren Wechselrichters auf die gleiche Weise gestartet werden. Das so gestaltete Verfahren hat zwar einen gegenüber einigen der oben beschriebenen Verfahren erhöhten Kommunikationsaufwand zur Folge, erlaubt es aber sehr gut, eine vollständige Kompensation der Abweichung des Energieerzeugungsverbundes von der Abregelleistung zu erreichen.

In einer Abwandlung des vorstehend beschriebenen Verfahrens kann auf eine Rückmeldung des Ergebnisses über das Erreichen der Sollwertvorgabe verzichtet werden, indem die Gesamtleistung überwacht wird. Sofern die Sollwertvorgabe die maximal erreichbare Leistung des ersten Wechselrichters übersteigt, führt dies zu einem Abfall der Gesamtleistung, der dem Maß des Übersteigens entspricht. Der Sollwert wird in dieser Verfahrensabwandlung solange erhöht, bis der Abfall der Gesamtleistung einen Schwellwert übersteigt. Der MPP-Leistungswert P_{MPP} entspricht dann der letzten Sollwertvorgabe ohne Abfall der Gesamtleistung.

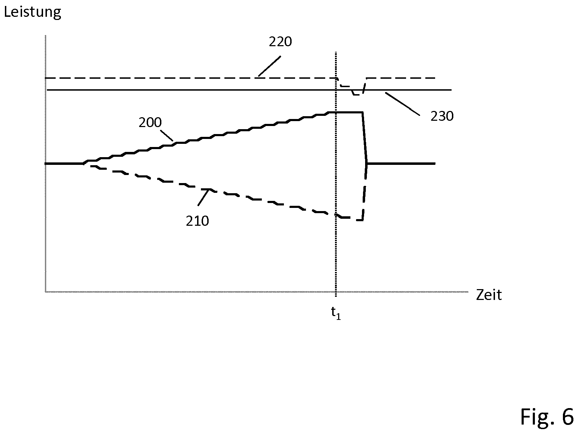

In Fig. 6 sind die zeitlichen Leistungsverläufe 200, 210 des ersten und des zweiten Wechselrichters, sowie der Leistungsverlauf 220 der Gesamtleistung als Ergebnis des vorstehend beschriebenen Verfahrens dargestellt. Durch Änderungen von Sollwertvorgaben wird die Leistung 200 des ersten Wechselrichters schrittweise gesteigert, bis dieser zum Zeitpunkt t₁ der Sollwertvorgabe nicht mehr folgen kann. Gleichzeitig wird die Leistung des zweiten Wechselrichters 210 schrittweise in kompensierenden Schritten gesenkt, so dass die Gesamtleistung 220 konstant bleibt. Als Folge entsteht nach dem Zeitpunkt t₁ eine Absenkung der Gesamtleistung 220, bis diese unter einen vorgegebenen Grenzwert 230 fällt. Danach wird die Leistung beider Wechselrichter auf die ursprüngliche Abregelleistung zurückgeführt. Sofern ein veränderter MPP-Leistungswert P_{MPP} ermittelt wurde, kann die Leistung beider Wechselrichter alternativ auf eine entsprechend veränderte Abregelleistung zurückgeführt werden.

An dieser Stelle sei darauf hingewiesen, dass das zeitversetzte Abfahren der Kennlinien innerhalb der Gruppe 150 bereits zu einer Reduzierung der maximalen Leistungsabweichung des kombinierten Leistungsprofiles der Gruppe von der gemeinsame Abregelleistung der Gruppe gegenüber dem Fall des gleichzeitigen Abfahrens der Kennlinien durch alle oder mehrere Wechselrichter der Gruppe führt.

### Bezugszeichenliste

- 10: Wechselrichter
- 11: Generator
- 12: Netz
- 13: Wechselrichterbrücke
- 14: Scaneinheit
- 15: Freigabesignal
- 16: Startsignal
- 17: Bus
- 20: Kennlinie
- 21, 22: Betriebspunkt
- 23: MPP
- 24, 25: Abfahrweg
- 24', 25': Leistungsprofil
- 100, 110, 120: Wechselrichter
- 101, 111, 121: Generator
- 103, 113, 123: Wechselrichterbrücke
- 104, 114, 124: Scaneinheit
- 105, 115, 125: Freigabesignal
- 106, 116, 126: Startsignal
- 108, 118, 128: Leistungsprofil
- 108', 118', 128': Leistungsprofil
- 130: Steuereinheit
- 140: Energieerzeugungsverbund
- 150: Gruppe
- 158: Leistungsprofil
- 200, 210, 220: Leistungsverlauf
- 230: Grenzwert

## Patentansprüche

1. Wechselrichter (10) zur Umwandlung von DC-Leistung eines Generators (11) in netzkonforme AC-Leistung, umfassend eine Scaneinheit (14) zum Abfahren mindestens eines Teils einer Kennlinie (20) des Generators (11) zur Bestimmung eines MPP-Leistungswertes (P_{MPP}),
**dadurch gekennzeichnet, dass**:
- der Wechselrichter (10) dazu eingerichtet ist, im Fall einer Abregelung auf eine Abregelleistung (P_{red}) ein Abfahren der Kennlinie (20) unter Bereitstellung eines von der Abregelleistung (P_{red}) abweichenden ersten Leistungsprofils (24', 25',108) nur dann auszulösen, wenn am Wechselrichter (10) ein Freigabesignal (15) anliegt, und einen Start und ein Ende des Abfahrens durch Ausgabe eines Startsignals (16) beziehungsweise eines Endsignals anzuzeigen, und
- der Wechselrichter (10) dazu eingerichtet ist, bei Empfang eines Startsignals (116) ein zweites Leistungsprofil (118) als AC-Leistung bereitzustellen,
wobei das erste Leistungsprofil (24', 25',108) eine Abweichung von der Abregelleistung (P_{red}) mit einem Vorzeichen aufweist, das entgegengesetzt zu einem Vorzeichen einer Abweichung des zweiten Leistungsprofils (118) von der Abregelleistung (P_{red}) ist,
- um eine Leistungsabweichung von einer vorgegebenen Abregelleistung (Pred) während der Bestimmung des MPP zu kompensieren.

2. Wechselrichter nach Anspruch 1, wobei der Wechselrichter dazu eingerichtet ist, den MPP-Leistungswert (P_{MPP}) nach dem Abfahren der Kennlinie (20) über eine Kommunikationsschnittstelle bereitzustellen.

3. Wechselrichter nach einem der vorangehenden Ansprüche, wobei das erste Leistungsprofil (24', 25',108) gegenüber der Abregelleistung (P_{red}) erhöhte Leistungswerte aufweist.

4. Wechselrichter nach einem der vorangehenden Ansprüche, wobei der Wechselrichter zur Übertragung des Freigabesignals (15), des Startsignals (16) und des Endsignals mit dem Internet verbindbar ist.

5. Wechselrichter nach einem der vorangehenden Ansprüche, wobei die Abregelleistung (P_{red}) als ein vorgegebener Prozentsatz des MPP-Leistungswertes (P_{MPP}) wählbar ist.

6. Wechselrichter nach einem der vorangehenden Ansprüche, wobei die Abregelleistung gegenüber dem MPP-Leistungswert (P_{MPP}) um einen vorgegebenen Prozentsatz einer Nennleistung des Wechselrichters (10) oder des Generators (11) reduziert wählbar ist.

7. Energieerzeugungsverbund (140), umfassend einen ersten Wechselrichter (100) und einen zweiten Wechselrichter (110) nach einem der vorangehenden Ansprüche, die zum Austausch des Freigabesignals (105, 115, 125), des Startsignals (106, 116, 126) und des Endsignals miteinander verbunden sind.

8. Energieerzeugungsverbund nach Anspruch 7, weiterhin umfassend eine mit dem ersten Wechselrichter (100) und dem zweiten Wechselrichter (110) verbundene Steuereinrichtung (130) zur Erzeugung des Freigabesignals (105, 115, 125).

9. Energieerzeugungsverbund nach Anspruch 7 oder 8, wobei der
Energieerzeugungsverbund (140) zum wechselseitigen Auslösen des Abfahrens der Kennlinien (20) innerhalb des Energieerzeugungsverbundes (140) über ein Token eingerichtet ist.

10. Energieerzeugungsverbund nach einem der Ansprüche 7 bis 9, wobei der erste Wechselrichter (100) zur Anpassung seiner Abregelleistung (P_{red}) in Abhängigkeit des MPP-Leistungswerts (P_{MPP}) des zweiten Wechselrichters (110) eingerichtet ist.

11. Energieerzeugungsverbund nach einem der Ansprüche 7 bis 10, wobei der erste Wechselrichter (100) mit einem Generator (101) mit verstellbarer Ausrichtung verbunden ist und wobei der erste Wechselrichter (100) zur Bereitstellung des ersten Leistungsprofils (108) durch Verstellung der Generatorausrichtung eingerichtet ist.

12. Energieerzeugungsverbund nach einem der Ansprüche 7 bis 11, wobei der erste Wechselrichter (100) eine Gruppe (150) mit einer Mehrzahl von Wechselrichtern umfasst, die eingerichtet sind, nacheinander in zeitlich überlappender Weise ihre Kennlinie (20) abzufahren.

13. Verfahren zur Umwandlung von DC-Leistung eines Generators (11) in netzkonforme AC-Leistung durch einen Wechselrichter (10) mit einer Scaneinheit (14) zum Abfahren mindestens eines Teils einer Kennlinie (20) des Generators (11) zur Bestimmung eines MPP-Leistungswertes (P_{MPP}), wenn der Wechselrichter (10) sich in einem auf eine Abregelleistung (P_{red}) abgeregelten Zustand befindet,
**dadurch gekennzeichnet, dass**
das Verfahren die Schritte umfasst:
- Abfahren der Kennlinie (20) unter Bereitstellung eines von der Abregelleistung (P_{red}) abweichenden ersten Leistungsprofils (24', 25',108) unter der Voraussetzung, dass ein Freigabesignal (15) am Wechselrichter (10) anliegt,
- Senden eines Startsignals(16) zu Beginn des Abfahrens und Senden eines Endsignals zum Ende des Abfahrens der Kennlinie (20) und
- Bereitstellung eines zweiten Leistungsprofils (118) als AC-Leistung bei Empfang eines Startsignals (116), wobei das erste Leistungsprofil (24', 25',108) eine Abweichung von der Abregelleistung (P_{red}) mit einem Vorzeichen aufweist, das entgegengesetzt zu einem Vorzeichen einer Abweichung des zweiten Leistungsprofils (118) von der Abregelleistung (P_{red}) ist,
- um eine Leistungsabweichung von einer vorgegebenen Abregelleistung (Pred) während der Bestimmung des MPP zu kompensieren.

14. Verfahren nach Anspruch 13, wobei der Wechselrichter (10) eine Gruppe (150) mit einer Mehrzahl von Einzelwechselrichtern (100, 110) umfasst, und wobei das Abfahren der Kennlinie (20) dadurch erfolgt, dass die Einzelwechselrichter (100, 110) der Gruppe (150) nacheinander in zeitlich überlappender Weise eine den Einzelwechselrichtern (100, 110) zugeordnete Einzelkennlinie (108', 118') abfahren.

15. Verfahren nach Anspruch 13, ausgeführt auf einem ersten Wechselrichter (100) und einem zweiten Wechselrichter (110), wobei das Abfahren der ersten Kennlinie durch schrittweise Steigerung einer Sollwertvorgabe der Leistung für den ersten Wechselrichter (100) erfolgt, und wobei das Abfahren der zweiten Kennlinie durch schrittweise, die Steigerung kompensierende Senkung einer Sollwertvorgabe der Leistung für den zweiten Wechselrichter (110) erfolgt.

16. Verfahren nach Anspruch 15, weiterhin umfassend ein Abfahren der ersten Kennlinie durch schrittweise Steigerung einer Sollwertvorgabe der Leistung für den zweiten Wechselrichter (110) und ein Abfahren der zweiten Kennlinie durch schrittweise, die Steigerung der Sollwertvorgabe des zweiten Wechselrichters (110) kompensierende Senkung einer Sollwertvorgabe der Leistung für den ersten Wechselrichter (100).

## Claims

1. An inverter (10) for converting DC power of a generator (11) into grid-conforming AC power, comprising a scanning unit (14) for tracing at least one part of a characteristic curve (20) of the generator (11) for determining an MPP power value (P_{MPP}), **characterized in that**
- the inverter (10) is configured, in the case of a derating to a derated power (P_{red}), to trigger a tracing of the characteristic curve (20) with provision of a first power profile (24', 25', 108) deviating from the derated power (P_{red}) only if an enable signal (15) is present at the inverter (10), and to indicate a start and an end of the tracing by outputting a start signal (16) and an end signal, respectively, and
- the inverter (10) is configured to provide a second power profile (118) as AC power upon receiving a start signal (116),
wherein the first power profile (24', 25',108) has a deviation from the derated power (P_{red}) with a sign that is opposite to a sign of a deviation of the second power profile (118) from the derated power (P_{red}) in order to compensate a power deviation from a predetermined derated power (P_{red}) while determining the MPP.

2. The inverter as claimed in claim 1, wherein the inverter is configured to provide the MPP power value (P_{MPP}) after tracing the characteristic curve (20) via a communication interface.

3. The inverter as claimed in either of the preceding claims, wherein the first power profile (24', 25',108) has increased power values in comparison with the derated power (P_{red}).

4. The inverter as claimed in any of the preceding claims, wherein the inverter is connectable to the Internet for the purpose of transmitting the enable signal (15), the start signal (16) and the end signal.

5. The inverter as claimed in any of the preceding claims, wherein the derated power (P_{red}) is selectable as a predefined percentage of the MPP power value (P_{MPP}).

6. The inverter as claimed in any of the preceding claims, wherein the derated power is selectable to be reduced by a predefined percentage of a rated power of the inverter (10) or of the generator (11) in comparison with the MPP power value (P_{MPP}).

7. A power generation network (140), comprising a first inverter (100) and a second inverter (110) as claimed in any of the preceding claims, which are connected to one another for the purpose of exchanging the enable signal (105, 115, 125), the start signal (106, 116, 126) and the end signal.

8. The power generation network as claimed in claim 7, furthermore comprising a control device (130) for generating the enable signal (105, 115, 125), said control device being connected to the first inverter (100) and the second inverter (110).

9. The power generation network as claimed in claim 7 or 8, wherein the power generation network (140) is configured for alternately triggering the tracing of the characteristic curves (20) within the power generation network (140) via a token.

10. The power generation network as claimed in any of claims 7 to 9, wherein the first inverter (100) is configured for adapting its derated power (P_{red}) depending on the MPP power value (P_{MPP}) of the second inverter (110).

11. The power generation network as claimed in any of claims 7 to 10, wherein the first inverter (100) is connected to a generator (101) with adjustable orientation, and wherein the first inverter (100) is configured for providing the first power profile (108) by adjusting the generator orientation.

12. The power generation network as claimed in any of claims 7 to 11, wherein the first inverter (100) comprises a group (150) having a plurality of inverters configured to trace their characteristic curve (20) successively in a temporally overlapping manner.

13. A method for converting DC power of a generator (11) into grid-conforming AC power by an inverter (10) comprising a scanning unit (14) for tracing at least one part of a characteristic curve (20) of the generator (11) for determining an MPP power value (P_{MPP}) if the inverter (10) is in a state reduced to a derated power (P_{red}),
**characterized in that**
the method comprises the steps of:
- tracing the characteristic curve (20) with provision of a first power profile (24', 25', 108) deviating from the derated power (P_{red}), under the precondition that an enable signal (15) is present at the inverter (10),
- transmitting a start signal (16) at the beginning of the tracing and transmitting an end signal at the end of the tracing of the characteristic curve (20) and
- providing a second power profile (118) as AC power upon receiving a start signal (116), wherein the first power profile (24', 25' 108) has a deviation from the derated power (P_{red}) with a sign that is opposite to a sign of a deviation of the second power profile (118) from the derated power (P_{red}) in order to compensate for a power deviation from a predetermined derated power (P_{red}) while determining the MPP..

14. The method as claimed in claim 13, wherein the inverter (10) comprises a group (150) having a plurality of individual inverters (100, 110), and wherein tracing the characteristic curve (20) is performed by the individual inverters (100, 110) of the group (150) tracing an individual characteristic curve (108', 118') assigned to the individual inverters (100, 110) successively in a temporally overlapping manner.

15. The method as claimed in claim 13, carried out on a first inverter (100) and a second inverter (110), wherein tracing the first characteristic curve is performed by a step by step increase of a setpoint value of the power for the first inverter (100), and wherein tracing the second characteristic curve is performed by a step by step decrease - compensating for the increase - of a setpoint value of the power for the second inverter (110).

16. The method as claimed in claim 15, further comprising tracing the first characteristic curve by a step by step increase of a setpoint value of the power for the second inverter (110) and tracing the second characteristic curve by a step by step decrease of a setpoint value of the power for the first inverter (100), said decrease compensating for the increase of the setpoint value of the second inverter (110).

## Revendications

1. Onduleur (10) pour convertir une puissance à courant continu venant d'un générateur (11) en puissance à courant alternatif conforme au réseau électrique, comprenant un scanner (14) afin de tracer au moins partiellement une courbe caractéristique (20) du générateur (11) pour la détermination d'une valeur de puissance PPM (Point de Puissance Maximal, P_{PPM}), **caractérisé en ce que**
- l'onduleur (10) est disposé de façon à déclencher, en cas d'une baisse à une puissance réduite (P_{red}), un traçage de la courbe caractéristique (20) selon un premier profil de puissance (24', 25', 108) divergeant de la puissance réduite (P_{red}) lorsqu'un signal de déclenchement (15) est appliqué à l'onduleur (10), et à indiquer un début et une fin du traçage au moyen de l'émission respectivement d'un signal de début (16) et d'un signal de fin, et
- l'onduleur (10) est disposé de façon à produire, à réception d'un signal de début (116), un deuxième profil de puissance (118) en tant que puissance à courant alternatif, dans lequel le premier profil de puissance (24', 25', 108) comporte une divergence de la puissance réduite (P_{red}) dont le signe algébrique est opposé au signe algébrique d'une divergence du deuxième profil de puissance (118) de la puissance réduite (P_{red}), afin de compenser une divergence de puissance par rapport à une puissance réduite (P_{red}) prédéfinie pendant la détermination du point de puissance maximale.

2. Onduleur selon la revendication 1, dans lequel l'onduleur est disposé de façon à fournir la valeur de puissance PPM (P_{PPM}) après le démarrage de la courbe caractéristique (20) sur une interface de communication.

3. Onduleur selon l'une des revendications précédentes, dans lequel le premier profil de puissance (24', 25', 108) comporte une valeur de puissance supérieure par rapport à la puissance réduite (P_{red}).

4. Onduleur selon l'une des revendications précédentes, dans lequel l'onduleur peut être connecté à Internet pour transmettre le signal de déclenchement (15), le signal de début (16) et le signal de fin.

5. Onduleur selon l'une des revendications précédentes, dans lequel la puissance réduite (P_{red}) est sélectionnable comme un pourcentage prédéfini de la valeur de puissance PPM (P_{PPM}).

6. Onduleur selon l'une des revendications précédentes, dans lequel la puissance réduite est sélectionnable comme réduite d'un pourcentage prédéfinie d'une puissance nominale de l'onduleur (10) ou du générateur (11) par rapport à la valeur de puissance PPM (P_{PPM}).

7. Groupe de production d'énergie (140), comprenant un premier onduleur (100) et un second onduleur (110) selon l'une des revendications précédentes, qui sont liés l'un avec l'autre afin d'échanger le signal de déclenchement (105, 115, 125), le signal de début (106, 116, 126) et le signal de fin.

8. Groupe de production d'énergie selon la revendication 7, comportant de plus une unité de commande (130) liée au premier onduleur (100) et au second onduleur (110) afin de produire le signal de déclenchement (105, 115, 125).

9. Groupe de production d'énergie selon la revendication 7 ou 8, dans lequel le groupe de production d'énergie (140) est disposé pour le déclenchement côté alternatif, avec un jeton, du traçage de la courbe caractéristique (20) à l'intérieur du groupe de production d'énergie (140).

10. Groupe de production d'énergie selon une des revendications 7 à 9, dans lequel le premier onduleur (100) est disposé de façon à adapter sa puissance réduite (P_{red}) en fonction de la valeur de puissance PPM (P_{PPM}) du second onduleur (110).

11. Groupe de production d'énergie selon une des revendications 7 à 10, dans lequel le premier onduleur (100) est lié avec un générateur (101) à orientation variable et dans lequel le premier onduleur (100) est disposé de façon à fournir le premier profil de puissance (108) par ajustement de l'orientation du générateur.

12. Groupe de production d'énergie selon une des revendications 7 à 11, dans lequel le premier onduleur (100) comporte un groupe (150) avec une pluralité d'onduleurs, qui sont disposés pour tracer leurs courbes caractéristiques (20) l'une après l'autre en chevauchement temporel.

13. Procédé pour la conversion d'une puissance à courant continu provenant d'un générateur (11) en puissance à courant alternatif conforme au réseau électrique au moyen d'un onduleur (10) comportant un scanner (14) afin de tracer au moins une partie d'une courbe caractéristique (20) du générateur (11) pour la détermination d'une valeur de puissance PPM (Point de Puissance Maximal, P_{PPM}), lorsque le redresseur (10) se trouve dans un état bridé à une puissance réduite (P_{red}), **caractérisé en ce que** le procédé comprend les étapes :
- traçage de la courbe caractéristique (20) selon un premier profil de puissance (24', 25', 108) divergeant de la puissance réduite (P_{red}) à condition qu'un signal de déclenchement (15) soit appliqué à l'onduleur (10),
- envoi d'un signal de départ (16) pour commencer le traçage et envoi d'un signal de fin pour terminer le traçage de la courbe caractéristique (20) et
- fourniture d'un second profil de puissance (118) en tant que puissance à courant alternatif à réception d'un signal de début (116), dans lequel le premier profil de puissance (24', 25', 108) comporte une divergence de la puissance réduite (P_{red}) dont le signe algébrique est opposé au signe algébrique d'une divergence du deuxième profil de puissance (118) de la puissance réduite (P_{red}), afin de compenser une divergence de puissance par rapport à une puissance réduite (P_{red}) prédéfinie pendant la détermination du point de puissance maximale.

14. Procédé selon la revendication 13, dans lequel l'onduleur (10) comporte un groupe (150) avec une pluralité d'onduleurs individuels (100, 110), et dans lequel le traçage de la courbe caractéristique (20) s'effectue de sorte que les onduleurs individuels (100, 110) du groupe (150) tracent l'un après l'autre, en chevauchement temporel, une des courbes caractéristiques individuelles (108', 118') associées aux onduleurs individuels (100, 110).

15. Procédé selon la revendication 13, effectué sur un premier onduleur (100) et un second onduleur (110), dans lequel le traçage de la première courbe caractéristique s'effectue par augmentation progressive d'une valeur de consigne de la puissance pour le premier onduleur (100), et dans lequel le traçage de la seconde courbe caractéristique s'effectue par diminution progressive compensant l'augmentation d'une valeur de consigne de la puissance pour le second onduleur (110).

16. Procédé selon la revendication 15, comportant de plus un traçage de la première courbe caractéristique par augmentation progressive d'une valeur de consigne de la puissance pour le second onduleur (110), et un traçage de la seconde courbe caractéristique par diminution progressive, compensant l'augmentation de la valeur de consigne du second onduleur (110), d'une valeur de consigne de la puissance pour le premier onduleur (100).
